# EUROPÄISCHE PATENTSCHRIFT

(11) **EP 0 686 363 B1**
(45) Veröffentlichungstag und Bekanntmachung des Hinweises auf die Patenterteilung: **22.07.1998**
(21) Anmeldenummer: 95104697.8
(22) Anmeldetag: 30.03.1995
(51) Int. Cl.: A47B 47/00, F16B 7/04, F16B 12/20

(54) **Gestellkonstruktion mit mehreren Stabelementen**
Frame construction with several bar members
Construction de cadres avec plusieurs éléments de barres

(30) Priorität: 02.05.1994 CH 1357/94
(43) Veröffentlichungstag der Anmeldung: 13.12.1995
(73) Patentinhaber: USM U. SCHAERER SOEHNE AG, CH-3110 Münsingen (CH)
(72) Erfinder: Schärer, Paul, CH-3110 Münsingen (CH); Gerber, André, CH-3700 Spiez (CH); Scherrer, Kurt, CH-3110 Münsingen (CH)
(74) Vertreter: Roshardt, Werner Alfred, Dipl.-Phys.

(56) Entgegenhaltungen:
- EP-A- 0 400 345
- DE-B- 1 114 749
- DE-U- 9 310 377
- FR-A- 2 628 460

## Beschreibung

### Technisches Gebiet

Die Erfindung betrifft eine Gestellkonstruktion zur Erstellung eines Möbels mit mehreren Stabelementen, die in einem Knotenpunkt mittels eines mehrere - auf zueinander paarweise orthogonalen Hauptachsen angeordnete - Bohrungen aufweisenden Knotenelements verbunden sind. Ferner erfasst die Erfindung ein Möbel mit solchen Gestellkonstruktionen.

### Stand der Technik

Eine Gestellkonstruktion der eingangs genannten Art ist aus der EP 0 400 345 B1 (USM U. Schärer Söhne AG) bekannt. Zum Verbinden mehrerer Stabelemente (z. B. Metallrohre) dient eine Kugel mit sechs Gewindebohrungen. Zum Befestigen eines Stabelements an der Kugel werden ein besonders ausgebildetes Spreizkeilelement und eine Schraube benötigt. Das Spreizkeilelement wird auf die Schraube aufgesetzt, welche zunächst lose in eine Bohrung der Kugel eingeschraubt wird. Das Stabelement wird vollständig über das Spreizkeilelement geschoben. Danach wird die Schraube festgezogen. Das Spreizkeilelement ist so ausgebildet, dass es sich unter dem axialen Druck der Schraube radial ausdehnt. Beim Festziehen der Schraube wird es also gegen die Innenwand des Stabelements gepresst.

Die sechs Bohrungen der bekannten Kugel sind auf drei paarweise zueinander senkrecht stehenden, zentral verlaufenden Achsen angeordnet. Mit der bekannten Konstruktion kann eine Vielzahl von Bauformen als Vitrinen, Raumteiler u. dgl. erstellt werden.

### Darstellung der Erfindung

Aufgabe der Erfindung ist es nun, die eingangs genannte Gestellkonstruktion dahingehend fortzubilden, dass nicht nur rechtwinklige Anordnungen, sondern auch gekrümmt verlaufende Anordnungen realisiert werden können. Die gesuchte Weiterentwicklung soll dabei vollständig kompatibel mit der bereits bestehenden Konstruktion sein.

Gemäss der Erfindung besteht die Lösung der Aufgabe darin, dass bei einer Gestellkonstruktion der eingangs genannten Art eine Bohrung vorgesehen ist, deren Achse - in einer durch zwei Hauptachsen definierten Ebene liegend - einen von Null verschiedenen, 20,5° nicht übersteigenden Winkel gegenüber einer der letztgenannten Hauptachsen versetzt ist.

Ein erfindungsgemässes Knotenelement unterscheidet sich von den vorbekannten durch eine einzige versetzte Bohrung. Die verbleibenden fünf Bohrungen sind nach wie vor auf zueinander paarweise senkrecht stehenden Achsen angeordnet. Die Erfindung beschränkt sich somit bewusst darauf, in einem Knotenpunkt nur einen (und nicht mehrere) von 90° verschiedenen Winkel zuzulassen. Untersuchungen haben gezeigt, dass konstruktionsmässig Winkel bis 20,5° realisierbar sind. Der Winkel beträgt jedoch vorzugsweise 15°. Dann lassen sich Trapezelemente realisieren, die sich zusammen mit Rechteckelementen wahlweise zu einer regulären in sich ringförmig geschlossenen polygonalen Struktur vereinigen lassen. Auch lassen sich Rundmöbel z. B. mit einem 90°-Bogen ohne den Einsatz zusätzlicher Spezialelemente erstellen.

Gemäss einer besonders vorteilhaften Ausführungsform weist die um 15° versetzte Bohrung eine seitliche Ausnehmung auf, die einen fluchtenden Durchgang für eine auf der Hauptachse angeordnete gegenüberliegende Bohrung bildet. Die Ausnehmung ist vorzugsweise kreisbogenförmig. Der durch diese Ausnehmung gebildete Durchgang erlaubt es, einen Schraubenzieher zum Fixieren des gegenüberliegenden Klemmkeilelements durch das Knotenelement hindurchzuführen. Eine alternative oder zusätzliche Funktion der Ausnehmung besteht in der Kennzeichnung der um 15° versetzten Bohrung. Auf diese Weise ist die Montage auch durch einen nicht besonders ausgebildeten Laien möglich.

Typischerweise ist das Knotenelement kugelförmig. Gemäss einer besonders bevorzugten Ausführungsform haben Bohrungen und Knotenelement ein Durchmesserverhältnis von ca. 1 : 3. Die in der Regel hohlzylindrischen Stabelemente sind entsprechenderweise im Durchmesser nicht viel kleiner als die Kugel. Die Dimensionsunterschiede betragen z. B. etwa 20 %.

Die Stabelemente sind z. B. mit einem Spreizkeilverbinder gemäss EP 0 400 345 B1 mit dem Knotenelement verbunden.

Bei der erfindungsgemässen Konstruktion gibt es zwei Stabelemente, die - am Knotenelement befestigt - einen 75°-Winkel einschliessen. Damit die Erfindung auch mit Stab- bzw. Kugelquerschnitten durchgeführt werden kann, die vergleichbare Durchmesser haben, ist eines der Stabelemente am stirnseitigen Ende einseitig segmentartig ausgenommen bzw. angeschnitten. Die Ausnehmung schafft Platz für das benachbarte Stabelement.

Zusätzlich kann der im endseitig angeschnittenen Stabelement eingefügte Spreizkeilverbinder einseitig angefast sein.

In an sich bekannter Weise können die Stabelemente mit einer mantelseitigen Oeffnung unweit des Endes des Stabelements versehen sein. Durch die Oeffnung kann der Spreizkeilverbinder mit Hilfe eines Spezialschraubenziehers gespannt werden.

Ein Möbel - sei es nun ein Rechteckmöbel, ein Trapezmöbel oder ein kombiniertes Möbel - kann im Prinzip ausschliesslich mit erfindungsgemässen Knotenelementen und dazugehörigen Stabelementen erstellt werden. Ein Rundmöbel ergibt sich durch eine Kombination von Trapez- und Rechteckmöbelelementen. Mit Hilfe der neuen Gestellkonstruktion können bogenförmige, im Umriss polygonale Möbel und Raumteiler erstellt werden mit Zentriwinkeln, die einem beliebigen Vielfachen von 30° entsprechen.

Weitere Merkmale der Erfindung ergeben sich aus der Detailbeschreibung und der Gesamtheit der Patentansprüche.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1a, b: Zwei verschiedene Ansichten eines erfindungsgemässen Knotenelements;
- Fig. 2: eine schematische Darstellung einer Seitenansicht eines erfindungsgemässen Stabes mit Ausnehmungen;
- Fig. 3: eine schematische Darstellung eines Klemmkeilverbinders mit Anfasung;
- Fig. 4: ein Beispiel eines aus 90°-Bogen ausgeführten Rundmöbels;
- Fig. 5: eine schematische perspektivische Darstellung eines Trapezmöbels mit anschliessenden Rechteckmöbeln.

Grundsätzlich sind in den Zeichnungen gleiche Teile mit gleichen Bezugszeichen versehen.

### Wege zur Ausführung der Erfindung

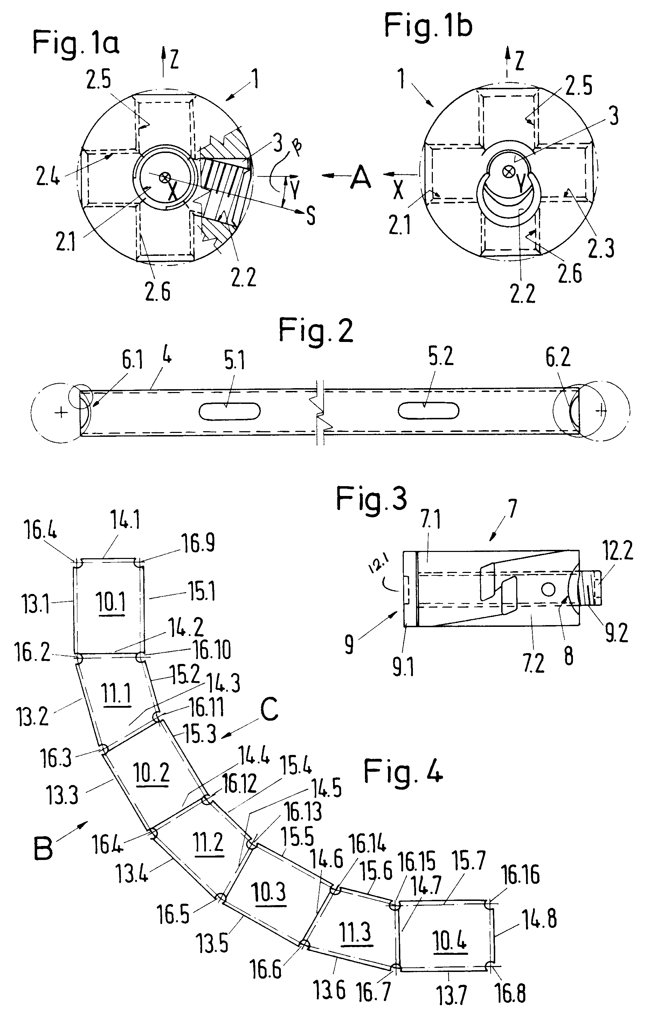

Fig. 1a und b zeigen eine bevorzugte Ausführungsform eines Kugelelements 1, wobei Fig. 1b einer Darstellung aus der Blickrichtung A gemäss Fig. 1a entspricht. Das Kugelelement 1 besteht aus Metall und weist sechs Bohrungen 2.1, ..., 2.6 mit Innengewinde auf. Fünf der sechs Bohrungen liegen auf drei zueinander paarweise senkrecht stehenden Hauptachsen x, y und z (Achsen eines rechtwinkligen Koordinatensystems). Im vorliegenden Beispiel liegen die Bohrungen 2.1 und 2.3 miteinander fluchtend auf der x-Achse und die Bohrungen 2.5 und 2.6 miteinander fluchtend auf der z-Achse. Auf der y-Achse befindet sich nur die Bohrung 2.4.

Im Sinne der Erfindung ist die Bohrung 2.2 auf einer von den genannten Hauptachsen verschiedenen Achse s. Diese Achse liegt in einer durch die y- und z-Achse aufgespannten Ebene und schliesst mit der y-Achse einen Winkel β von 15° ein. Daraus ergibt sich, dass die Bohrung 2.2 mit der Bohrung 2.6 einen 75°-Winkel und mit der Bohrung 2.5 einen 105°-Winkel einschliesst. Zu den Bohrungen 2.1 und 2.3 steht die Bohrung 2.2 dagegen nach wie vor in einem 90°-Winkel.

Die Bohrung 2.2 weist eine Ausnehmung 3 auf, welche bezüglich der y-Achse eine zylindrische Innenfläche bildet. Die Ausnehmung 3 stellt gleichsam eine auf der y-Achse liegende, gewindefreie Bohrung (bzw. einen Bohrungsabschnitt) dar. Sie ermöglicht es, ein Werkzeug (z. B. einen Spezialschraubenzieher) von der Seite der um 15° versetzten Bohrung 2.2 her in das Kugelelement 1 einzuführen, um beispielsweise eine Schraube eines in der Bohrung 2.4 zu verankernden Befestigungselements festzuziehen.

Weiter zeigt die Ausnehmung 3 auch unmissverständlich an, welche der sechs Bohrungen um 15° versetzt ist.

Die Innendurchmesser der mit Gewinde ausgestatteten Bohrungen 2.1, ..., 2.6 betragen beispielsweise etwa einen Drittel des Durchmessers des Kugelelements 1. D. h., die Bohrungen 2.1, ..., 2.6 sind verhältnismässig gross.

Fig. 2 zeigt einen hohlzylindrischen Stab 4, welcher mit einem Spreizkeilelement mit der um 15° versetzten Bohrung 2.2 verbindbar ist. Er weist in an sich bekannter Weise nahe seiner Enden angebrachte Schlitze 5.1, 5.2 im Mantel auf. Auf einer gemeinsamen Achse bzw. Mantellinie mit diesen Schlitzen 5.1, 5.2 befinden sich stirnseitig einseitig angebrachte Ausnehmungen 6.1, 6.2. Es handelt sich um abgeschrägte, kreissegmentartige Ausnehmungen.

Fig. 3 zeigt ein Spreizkeilelement 7 mit einer Schraube 9, wie es z. B. aus der eingangs zitierten EP 0 400 345 B1 (vgl. z. B. dortige Fig. 1, 5, 7) beschrieben ist. Es besteht aus zwei ineinandergreifenden, keilförmig geschnittenen Hälften 7.1, 7.2 und hat die Form einer zylindrischen Hülse. Die Schraube 9 passt in die Bohrungen 2.1, ..., 2.6. Wird die Schraube 9 angezogen, werden die Hälften 7.1, 7.2 unter dem axialen Druck radial nach aussen gepresst und verspannen sich im Ende des entsprechenden Stabes 4.

Dieses an sich bekannte Bauteil ist erfindungsgemäss mit einer einseitigen Anfasung 8 versehen, welche mit den Ausnehmungen 6.1 und 6.2 korrespondiert.

Die Schraube 9 weist an ihrem Kopf 9.1 einen ersten Sechskantanschluss 12.1 und am Bolzenende 9.2 einen zweiten Sechskantanschluss 12.2 auf. Das Spreizkeilelement 7 kann daher erstens durch einen vom fernen Stabende her eingeführten langen Schraubenzieher, zweitens durch einen durch den nächstliegenden Schlitz 5.1 oder 5.2 eingeführten Spezialschraubenzieher und drittens durch einen durch die entsprechende, gegenüberliegende Bohrung des Kugelelements 1 hindurchgeführten Schraubenzieher gespannt werden. Bei den ersten beiden Montagevarianten wird der Schraubenzieher am Kopf 9.1 und bei der dritten am Bolzenende 9.2 angesetzt. Die Ausnehmung 3 stellt nun sicher, dass das Spannen vom Bolzenende her (obige Variante drei) auch für eine in der Bohrung 2.4 einzusetzende Schraube möglich ist.

Fig. 4 zeigt den Grundriss eines mit der beschriebenen Verbindungskonstruktion realisierbaren Rundmöbels. Es besteht aus vier Rechteckmöbeln 10.1, ..., 10.4 mit jeweils dazwischen eingesetzten Trapezmöbeln 11.1, ..., 11.3. Durch jedes Trapezmöbel 11.1, ..., 11.3 wird eine Richtungsänderung des Rundmöbels um 30° bewirkt.

Das Rundmöbel ist im vorliegenden Beispiel an der Aussenseite mit gleich langen Stäben 13.1, ..., 13.7 versehen. An der Innenseite befinden sich jedoch unterschiedlich lange Stäbe 15.1, ..., 15.7, je nachdem, ob sie einem Trapezmöbel 11.1, ..., 11.3 oder einem Rechteckmöbel 10.1, ..., 10.4 zugeordnet sind. Zwischen den aussenseitlichen und den innenseitlichen Stäben 13.1, ..., 13.7 resp. 15.1, ..., 15.7 befinden sich gleich lange Stäbe 14.1, ..., 14.8. Die gesamte Konstruktion ist mit Knotenelementen 16.1, ..., 16.16 gemäss Fig. 1a, b verbunden.

Es ist deutlich zu erkennen, dass beim Knotenelement 16.2, welches gleichzeitig Rechteck und Trapezmöbel 10.1 resp. 11.1 verbindet, die Stäbe 13.1 und 14.2 rechtwinklig zueinander stehen, die Stäbe 13.2 und 14.2 dagegen einen Winkel von 75° einschliessen.

Während von aussen (d. h. aus der Richtung B betrachtet) das Rundmöbel einen regulären Polygonzug zeigt, erscheint es von innen (aus der Richtung C betrachtet) ungleichmässig, da sich die längeren Seiten (15.1, 15.3, 15.5, 15.7) der Rechteckmöbel 10.1, ..., 10.4 mit den kürzeren Seiten (15.2, 15.4, 15.6) der Trapezmöbel 11.1, ..., 11.3 abwechseln.

Der in Fig. 4 gezeigte Aufbau hat den Vorteil, dass die Rechteckmöbel 10.1, ..., 10.4 in an sich bekannter Weise mit unterschiedlichen Einbausystemen (Tablare, Auszugsschubladen etc.) ausgerüstet werden können und optimal den Kundenwünschen anpassbar sind. Die weniger vielseitig nutzbaren Trapezmöbel 11.1, ..., 11.3 sind - was durchaus erwünscht ist - in der Minderzahl.

Das Rundmöbel ist ein- oder mehrstöckig aufbaubar. Es kann also z. B. aus zwei, drei oder mehr übereinander angeordneten Regalelementen bestehen.

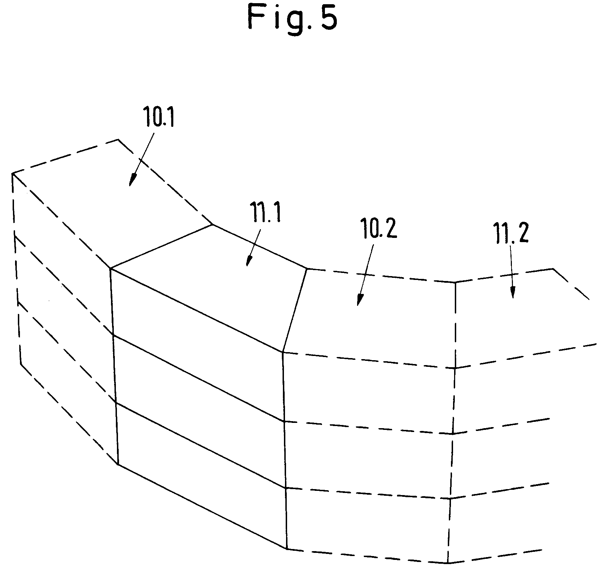

Fig. 5 zeigt eine perspektivische Ansicht eines Teils des in Fig. 4 gezeigten Rundmöbels. Mit durchgezogenen Linien ist das Trapezmöbel 11.1 gezeigt. Es weist eine Tiefe von z. B. 30 cm - 60 cm, eine Höhe von z. B. 1 m - 1.50 m, eine kurze Länge von z. B. 30 cm - 50 cm und eine lange Seite von 40 cm - 80 cm auf. Durch geeignete Wahl der Längenverhältnisse kann die Krümmung des Rundmöbels auf die jeweiligen Bedürfnisse abgestimmt werden.

Es ist leicht erkennbar, dass mit der erfindungsgemässen Knotenkonstruktion geschlossene Ringe, Halbkreisbögen, S-Linien und anderes mehr möglich ist.

Zusammenfassend ist festzustellen, dass durch die Erfindung eine verblüffend einfache Möglichkeit zur Herstellung von Rundmöbeln auf der Basis des bekannten und bewährten Konstruktionssystems geschaffen worden ist.

## Patentansprüche

1. Gestellkonstruktion zur Erstellung eines Möbels mit mehreren Stabelementen (13.1, 14.2, 13.2), die in einem Knotenpunkt (16.2) mittels eines mehrere - auf zueinander paarweise orthogonalen Hauptachsen angeordnete - Bohrungen (2.1, 2.3, 2.4, 2.5, 2.6) aufweisenden Knotenelements (1) verbunden sind, dadurch gekennzeichnet, dass fünf von sechs Bohrungen auf drei zueinander paarweise orthogonalen Hauptachsen angeordnet sind und dass die sechste Bohrung (2.2) auf einer Achse (s) vorgesehen ist, die in einer durch zwei Hauptachsen (y, z) definierten Ebene liegend um einen von Null verschiedenen, 20.5° nicht übersteigenden Winkel (β) gegenüber einer der letztgenannten Achsen (y) versetzt ist.

2. Gestellkonstruktion nach Anspruch 1, dadurch gekennzeichnet, dass die eine Bohrung (2.2) um einen Winkel von 15° versetzt ist und vorzugsweise eine seitliche Ausnehmung aufweist, die einen fluchtenden Durchgang mit einer auf der Hauptachse (y) angeordneten, gegenüberliegenden Bohrung (2.4) bildet.

3. Gestellkonstruktion nach einem der Ansprüche 1 bis 2, dadurch gekennzeichnet, dass das Knotenelement (1) kugelförmig ist und dass die Bohrungen (2.1, ..., 2.6) und das Knotenelement (1) ein Durchmesserverhältnis von etwa 1 : 3 haben.

4. Gestellkonstruktion nach einem der Ansprüche 1 bis 3, dadurch gekennzeichnet, dass die Stabelemente (13.1, 14.2, 13.2) jeweils durch einen Spreizkeilverbinder (7) mit dem Knotenelement (1) verbunden sind.

5. Gestellkonstruktion nach einem der Ansprüche 2 bis 4, dadurch gekennzeichnet, dass eines der Stabelemente (14.2, 13.2), welche an den in einem 75°-Winkel zueinanderstehenden Bohrungen (2.2, 2.6) befestigt sind, stirnseitig einseitig ausgenommen (6.1, 6.2) ist.

6. Gestellkonstruktion nach Anspruch 5, dadurch gekennzeichnet, dass ein im angefasten Stabelement (14) eingesetzter Spreizkeilverbinder (7) in entsprechender Weise stirnseitig einseitig angefast (8) ist.

7. Gestellkonstruktion nach einem der Ansprüche 1 bis 6, dadurch gekennzeichnet, dass die Stabelemente (4) mit mindestens einer mantelseitigen Oeffnung (5.1, 5.2) zum Einführen eines Spezialschraubenziehers bei der Montage ausgestattet sind.

8. Möbel mit Gestellkonstruktionen nach einem der Ansprüche 2 bis 7, dadurch gekennzeichnet, dass es ausschliesslich Knotenelemente (16.2, 16.3, 16.10, 16.11) mit jeweils einer um 15° versetzten Bohrung aufweist und als Trapezmöbel (11.1) ausgeführt ist.

9. Möbel nach Anspruch 8, dadurch gekennzeichnet, dass es abwechslungsweise aneinander anschliessende Trapez- und Rechteckmöbel-Abschnitte (11.1, ..., 11.3 resp. 10.1, ..., 10.4) zur Bildung eines Rundmöbels aufweist.

10. Knotenelement (1) für eine Gestellkonstruktion nach einem der Anspüche 1 bis 7, mit mehreren, auf zueinander paarweise orthogonalen Hauptachsen angeordneten Bohrungen (2.1, 2.3, 2.4, 2.5, 2.6), dadurch gekennzeichnet, dass sechs Bohrungen vorgesehen sind, von denen fünf auf drei zueinander paarweise orthogonalen Hauptachsen angeordnet sind und die sechste Bohrung (2.2) auf einer Achse (s) vorgesehen ist, die in einer durch zwei Hauptachsen (y, z) definierten Ebene liegend um einen von Null verschiedenen, 20.5° nicht übersteigenden Winkel (β) gegenüber einer der letztgenannten Achsen (y) versetzt ist.

## Claims

1. Frame structure for constructing an item of furniture with a plurality of rod elements (13.1, 14.2, 13.2) which are connected at an assembly point (16.2) by means of an assembly element (1) comprising a plurality of bores (2.1, 2.3, 2.4, 2.5, 2.6) which are disposed on principal axes which are mutually orthogonal in pairs, characterized in that five of six bores are disposed on three principal axes which are mutually orthogonal in pairs; and in that the sixth bore (2.2) is disposed on an axis (s) which lies in a plane delimited by two principal axes (y, z) and is offset with respect to one of the latter principal axes (y) by an angle (β) which is different from zero but does not exceed 20.5°.

2. Frame structure according to Claim 1, characterized in that one bore (2.2) is offset by a 15°-angle and preferably has a lateral recess which forms an aligned passage with an opposite bore (2.4) disposed on one of the principal axes (y).

3. Frame structure according to either of Claims 1 and 2, characterized in that the assembly element (1) is spherical; and in that ratio between the diameters of the bores (2.1, ..., 2.6) and of the assembly element (1) is approximately 1 : 3.

4. Frame structure according to any one of Claims 1 to 3, characterized in that the rod elements (13.1, 14.2, 13.2) are each connected to the assembly element (1) by an expanding wedge connector (7).

5. Frame structure according to any one of Claims 2 to 4, characterized in that one of the rod elements (14.2, 13.2), which are secured to the bores (2.2, 2.6) which are disposed at a mutual 75°-angle, is recessed (6.1, 6.2) on one side at the end faces.

6. Frame structure according to Claim 5, characterized in that an expanding wedge connector (7) inserted in the chamfered rod element (14) is chamfered (8) on one side at the end faces in corresponding manner.

7. Frame structure according to any one of Claims 1 to 6, characterized in that the rod elements (4) have at least one opening (5.1, 5.2) in their convex surface for introducing a special screwdriver during assembly.

8. Item of furniture with frame structures according to any one of Claims 2 to 7, characterized in that it comprises exclusively assembly elements (16.2, 16.3, 16.10, 16.11) each having a bore offset by 15°, and takes the form of a trapezoidal item of furniture (11.1).

9. Item of furniture according to Claim 8, characterized in that it comprises trapezoidal and rectangular items of furniture (11.1, ..., 11.3 and 10.1, ..., 10.4, respectively) which adjoin one another alternately in order to form a round item of furniture.

10. Assembly element (1) for a frame structure according to any one of Claims 1 to 7, with a plurality of bores (2.1, 2.3, 2.4, 2.5, 2.6) disposed on principal axes which are mutually orthogonal in pairs, characterized in that six bores are provided of which five are disposed on three principal axes which are mutually orthogonal in pairs and the sixth bore (2.2) is disposed on an axis (s) which lies in a plane delimited by two principal axes (y, z) and is offset with respect to one of the latter principal axes (y) by an angle (β) which is different from zero but does not exceed 20.5°.

## Revendications

1. Construction de cadres pour le montage d'un meuble avec plusieurs éléments de barres (13.1, 14.2, 13.2) qui sont assemblés en un noeud (16.2) au moyen d'un élément de noeud (1) présentant plusieurs trous (2.1, 2.3, 2.4, 2.5, 2.6) - disposés sur des axes principaux orthogonaux deux à deux l'un par rapport à l'autre - caractérisée en ce que cinq des six trous sont disposés sur trois axes principaux orthogonaux deux à deux l'un par rapport à l'autre et en ce que le sixième trou (2.2) est prévu sur un axe (s) qui, se trouvant dans un plan défini par deux axes principaux (y, z), est décalé par rapport à l'un de ces derniers axes (y) d'un angle (β) différent de zéro et ne dépassant pas 20,5°.

2. Construction de cadres suivant la revendication 1, caractérisée en ce que le trou isolé (2.2) est décalé d'un angle de 15° et présente de préférence un évidement latéral, qui forme un passage aligné avec un trou (2.4) lui faisant face, disposé sur l'axe principal (y).

3. Construction de cadres suivant l'une quelconque des revendications 1 à 2, caractérisée en ce que l'élément de noeud (1) est de forme sphérique et en ce que les trous (2.1, ..., 2.6) et l'élément de noeud (1) présentent un rapport des diamètres d'environ 1 : 3.

4. Construction de cadres suivant l'une quelconque des revendications 1 à 3, caractérisée en ce que les éléments de barres (13.1, 14.2, 13.2) sont assemblés à l'élément de noeud (1) par un raccord à coin expansible (7).

5. Construction de cadres suivant l'une quelconque des revendications 2 à 4, caractérisée en ce qu'un des éléments de barres (14.2, 13.2), qui sont fixés aux trous (2.2, 2.6) situés à un angle de 75° l'un de l'autre, est évidé dans sa face frontale d'extrémité (6.1, 6.2).

6. Construction de cadres suivant la revendication 5, caractérisée en ce qu'un raccord à coin expansible (7) inséré dans l'élément de barre (14) biseauté est biseauté de façon correspondante (8) à sa face frontale d'extrémité.

7. Construction de cadres suivant l'une quelconque des revendications 1 à 6, caractérisée en ce que les éléments de barres (4) sont pourvus d'au moins une ouverture (5.1, 5.2) dans leur surface latérale pour l'introduction d'un tournevis spécial lors du montage.

8. Meuble avec des constructions de cadres suivant l'une quelconque des revendications 2 à 7, caractérisé en ce qu'il présente exclusivement des éléments de noeud (16.2, 16.3, 16.10, 16.11) avec chacun un trou décalé de 15° et exécuté sous la forme d'un meuble trapézoïdal (11.1).

9. Meuble suivant la revendication 8, caractérisé en ce qu'il présente en alternance des segments de meuble trapézoïdaux et rectangulaires (11.1, ..., 11.3, respectivement 10.1, ..., 10.4) pour la formation d'un meuble rond.

10. Elément de noeud (1) pour une construction de cadres suivant l'une quelconque des revendications 1 à 7, avec plusieurs trous (2.1, 2.3, 2.4, 2.5, 2.6) disposés sur des axes principaux orthogonaux deux à deux l'un par rapport à l'autre, caractérisé en ce qu'il est prévu six trous, dont cinq sont disposés sur trois axes principaux orthogonaux deux à deux l'un par rapport à l'autre et le sixième trou (2.2) est prévu sur un axe (s) qui, se trouvant dans un plan défini par deux axes principaux (y, z), est décalé par rapport à l'un de ces derniers axes (y) d'un angle (β) différent de zéro et ne dépassant pas 20,5°.
